**Europäisches Patentamt**

**European Patent Office**

**Office européen des brevets**

(19)

(11) Veröffentlichungsnummer: **0 218 202**
**B1**

(12) # EUROPÄISCHE PATENTSCHRIFT

(45) Veröffentlichungstag der Patentschrift:
04.01.89

(21) Anmeldenummer: 86113806.7

(22) Anmeldetag: 02.10.86

(51) Int. Cl.⁴: **F 16 F 13/00,** B 60 K 5/12,
F 16 F 9/46

(54) Aktives Zweikammer-Motorlager.

(30) Priorität: 08.10.85 DE 3535906

(43) Veröffentlichungstag der Anmeldung:
15.04.87 Patentblatt 87/16

(45) Bekanntmachung des Hinweises auf die Patenterteilung:
04.01.89 Patentblatt 89/1

(84) Benannte Vertragsstaaten:
DE FR GB IT SE

(56) Entgegenhaltungen:
EP-A-0 137 112
EP-A-0 154 828

(73) Patentinhaber: **METZELER Gesellschaft mit beschränkter Haftung, Gneisenaustrasse 15, D-8000 München 50 (DE)**

(72) Erfinder: **Härtel, Volker, Dr., Fichtenstrasse 50, D-8034 Germering (DE)**

(74) Vertreter: **Michelis, Theodor, Dipl.- Ing., Gneisenaustrasse 15, D-8000 München 50 (DE)**

EP 0 218 202 B1

LIBER, STOCKHOLM 1989

## Beschreibung

Die Erfindung betrifft ein aktives Zweikammer-Motorlager mit hydraulischer Dämpfung, insbesondere für Kraftfahrzeuge, dessen gummielastische Umfangswände aufweisende Kammern mit einer elektroviskosen Flüssigkeit gefüllt sind, deren Viskosität durch Anlegen eines elektrischen Feldes im Bereich mindestens einer, eine starre Zwischenplatte zwischen den beiden Kammern durchsetzenden Überströmöffnung steuerbar ist.

Ein derartiges Motorlager ist aus der EP-A-137 112 bekannt. Dabei besteht die Überströmöffnung aus einem schlitzförmigen Kanal mit rechteckigem Querschnitt, dessen Wände durch die beiden, das elektrische Feld erzeugende Elektroden gebildet sind. Der Querschnitt eines solchen Kanals ist jedoch durch die Außenabmessungen des Motorlagers sowie vertretbarer Elektrodenabstände begrenzt, da sonst die anzulegende Spannung zu hoch würde. Wegen der schlitzförmigen Kanalform können darüberhinaus nur relativ niederviskose Flüssigkeiten verwendet werden, die auch nur einen geringeren elektroviskosen Effekt zeigen.

Demgegenüber liegt der Erfindung die Aufgabe zugrunde, ein aktives Zweikammer-Motorlager zu schaffen, bei dem Querschnitt und geometrischer Gestaltung der Überströmöffnungen nur geringe Grenzen gesetzt sind, und bei dem insbesondere auch hochviskose Flüssigkeiten verwendet werden können, die einen deutlich besseren elektroviskosen Effekt zeigen. Damit können dann Dämpfung und dynamische Steifigkeit durch entsprechende Veränderung der Viskosität der Flüssigkeit durch Anlegen eines elektrischen Feldes besser und präziser auf die jeweiligen Betriebszustände abgestimmt werden.

Zur Lösung dieser Aufgabe ist erfindungsgemäß vorgesehen, daß im Bereich mindestens einer der Überströmöffnungen mindestens zwei quer zur Flüssigkeitsströmung verlaufende und parallel hintereinander liegende metallische Siebplatten angeordnet sind, die als Elektroden geschaltet sind.

Durch Ausbildung der Elektroden als metallische Siebe wird einmal erreicht, daß der Strömungswiderstand im feldlosen Zustand nur sehr gering ist, während bei Anlegen einer Spannung zwischen den Siebelektroden ein vergleichsweise homogenes elektrisches Feld herrscht.

Die Überströmöffnung kann dabei die Zwischenplatte senkrecht durchsetzen und einen Durchmesser von 10 bis 90 % des Zwischenplattendurchmessers aufweisen, wobei die Siebplatten parallel zueinander in die Überströmöffnung eingesetzt sind und diese vollflächig überdecken.

Dabei ist es möglich, daß der mit den Siebplatten abgedeckten Durchströmöffnung ein langer, die Siebplatten wendelförmig umschließender und in der Zwischenplatte verlaufender Überströmkanal parallel geschaltet ist. Dieser Überströmkanal kann am Eintritt oder Austritt ebenfalls mit als Elektroden geschalteten Siebplatten abgedeckt sein, so daß hierdurch eine doppelte Beeinflussung der Strömung möglich ist.

Es ist aber auch möglich, daß die Überströmöffnung allein als die Zwischenplatte wendelförmig durchsetzender Kanal ausgebildet ist, der am Eintritt oder Austritt mit als Elektroden geschalteten Siebplatten abgedeckt ist.

Die Siebplatten bestehen zweckmäßigerweise aus einem dünnen Drahtgewebe, wobei sowohl die Maschenweite als auch die Drahtstärke die Siebe maximal 1/3 des Abstandes der Siebplatten betragen soll. Als zweckmäßigen Abstand für die Siebplatten hat sich eine Größe von 1 bis 5 mm ergeben.

Anhand einer schematischen Zeichnung sind Aufbau und Wirkungsweise von Ausführungsbeispielen nach der Erfindung näher erläutert. Dabei zeigen

Fig. 1  einen Querschnitt durch ein Motorlager mit einer die Zwischenplatte senkrecht durchsetzenden Überströmöffnung,

Fig. 2  einen Querschnitt durch die Zwischenplatte des Motorlagers nach Fig. 1 mit den Siebplatten,

Fig. 3  einen Längsschnitt durch das Motorlager mit Parallelschaltung einer durch Siebplatten abgedeckten senkrechten Überströmöffnung in der Zwischenplatte und einem wendelförmigen Kanal ohne Siebplatten,

Fig. 4  einen Querschnitt durch das Motorlager nach Fig. 3 mit Blick auf die Zwischenplatte,

Fig. 5  einen Längsschnitt durch ein Motorlager mit zwei parallel geschalteten Überströmöffnungen entsprechend Fig. 3, die beide mit Siebplatten abgedeckt sind,

Fig. 6  einen Querschnitt durch das Motorlager nach Fig. 5 mit Blick auf die Zwischenplatte,

Fig. 7  einen Längsschnitt durch ein Motorlager mit einem wendelförmigen Kanal mit Siebplatten in der Zwischenplatte und

Fig. 8  einen Querschnitt durch das Motorlager nach Fig. 7 mit Blick auf die Zwischenplatte.

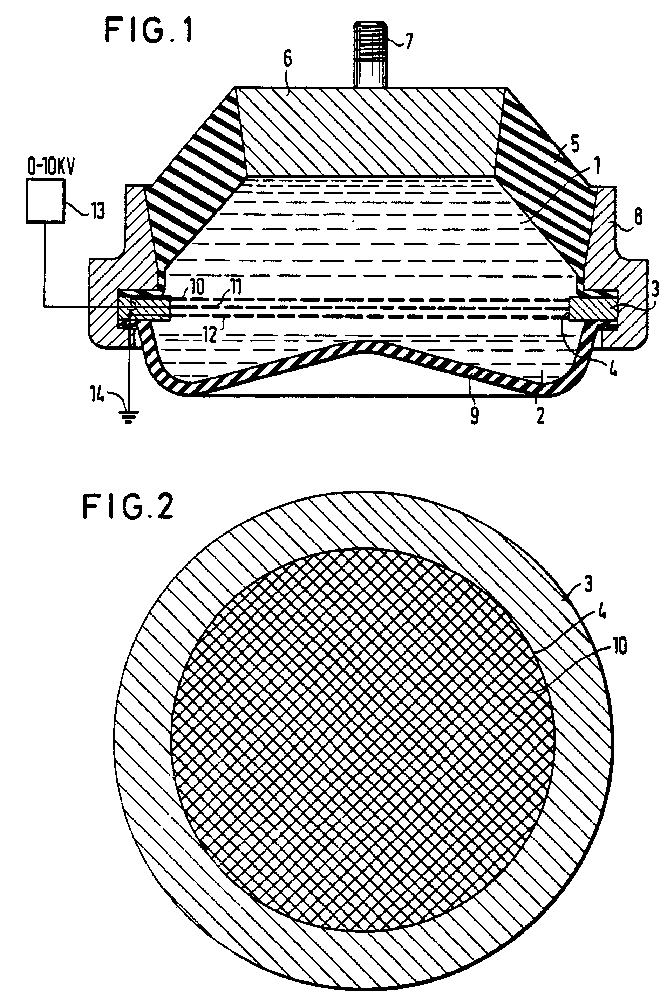

Wie aus Fig. 1 zu ersehen ist, besteht das Zweikammer-Motorlager zunächst in herkömmlicher Weise aus einer oberen Kammer 1 und einer unteren Kammer 2, die durch eine, in der noch zu beschreibenden Zwischenplatte 3 verlaufenden Überströmöffnung 4 hydraulisch miteinander verbunden sind. Die obere Kammer 1 wird von einer starkwandigen, hohlkegelförmigen Kammerwandung 5 aus einem gummielastischem Material gebildet, die an der oberen Stirnseite mit einer Lagerplatte 6, an der über einen Bolzen 7 beispielsweise der Motor festgelegt sein kann, und im unteren Bereich mit dem Halteflansch 8 zum Anschluß an ein nicht näher dargestelltes Widerlager haftend verbunden ist. Die untere Kammer 2 wird von einer beispielsweise tassenförmigen Kammerwandung 9 aus ebenfalls gummielastischem, jedoch weicherem Material gebildet, die auch mit dem Flansch 8 verbunden ist.

Die Zwischenplatte 3 weist bei dem dargestellten Ausführungsbeispiel eine Überströmöffnung 4 auf, deren Durchmesser bis zu 90 % des Zwischenplattendurchmessers betragen kann. In diese Überströmöffnung 4 sind parallel zueinander übereinanderliegend drei Siebplatten 10, 11 und 12 eingesetzt, die die Überströmöffnung 4 vollflächig ausfüllen. Die einzelnen Siebplatten bestehen dabei aus dünnem Drahtgewebe mit einer Maschenweite von etwa 1 mm und weisen untereinander einen Abstand von vorzugsweise 1 bis 3 mm auf. Maschenweite und Drahtstärke der Siebe sind zweckmäßigerweise dabei so zu bemessen, daß beide Kenngrößen klein gegen den Abstand der Siebe sind. Im allgemeinen sollten sowohl Maschenweite als auch Drahtstärke maximal 1/3 des Abstandes der Siebplatten 10, 11 und 12 betragen.

Von den drei dargestellten Siebplatten 10, 11 und 12 ist bei dem vorliegenden Ausführungsbeispiel die mittlere Siebplatte 11 als Elektrode an eine Spannungsquelle 13 gelegt, während die beiden anderen Siebplatten 10 und 12 auf Erdpotential 14 liegen.

Das Motorlager selbst ist mit einer elektroviskosen Flüssigkeit gefüllt, deren Grundviskosität zwischen etwa 100 bis 1000 mPa x s liegt. Derartige elektroviskose Flüssigkeiten, wie sie aus den US-PS-2 886 151 und 3 047 507 bekannt sind, können beispielsweise aus einer Mischung von etwa 40 bis 60 Gew.-% Kieselsäure als Feststoff, 30 bis 50 Gew.-% einer geeigneten organischen Phase mit niedriger Elektrizitätskonstante, 5 bis 10 % Gew.-% Wasser sowie etwa 5 Gew.-% eines Dispergiermittels bestehen.

Bei Anlegen eines elektrischen Feldes zwischen den Siebplatten 10, 11 und 12 kann die Viskosität der Flüssigkeit um den Faktor 3 bis 100 erhöht werden, so daß damit praktisch ein Flüssigkeitsdurchgang durch die Überströmöffnung 4 gestoppt und damit virtuell völlig verschlossen wird. Damit läßt sich eine sehr effektive Regelung der Dämpfungswerte eines derartigen Lagers durchführen, während über einen weiten Frequenzbereich nur eine geringe dynamische Verhärtung auftritt. Bei nicht eingeschaltetem Elektrodenfeld ist der Strömungswiderstand eines derartigen Lagers jedoch sehr gering, so daß es sich bei niedrigen Frequenzen nahezu wie ein reines Gummilager verhält, da dem Flüssigkeitsstrom von einer Kammer in die andere kaum ein Widerstand entgegengesetzt wird.

Bei dem dargestellten Ausführungsbeispiel sind drei Siebplatten 10, 11 und 12 vorgesehen. Es ist jedoch auch möglich, die Zahl der Siebplatten zwischen 2 und 8 zu wählen, wobei die Siebe dann alternierend als Elektroden geschaltet sind, so daß an jedem zweiten Sieb die Steuerspannung liegt, während die anderen Siebe auf Erdpotential geschaltet sind. Zweckmäßigerweise werden jedoch 3 bis 5 Siebplatten verwendet. Durch die Dimensionierung der Siebe und die geringe Maschenweite im Verhältnis zum Siebabstand wird erreicht, daß zwischen den Siebelektroden ein vergleichsweise homogenes elektrisches Feld herrscht, ähnlich wie zwischen ungelochten Kondensatorplatten.

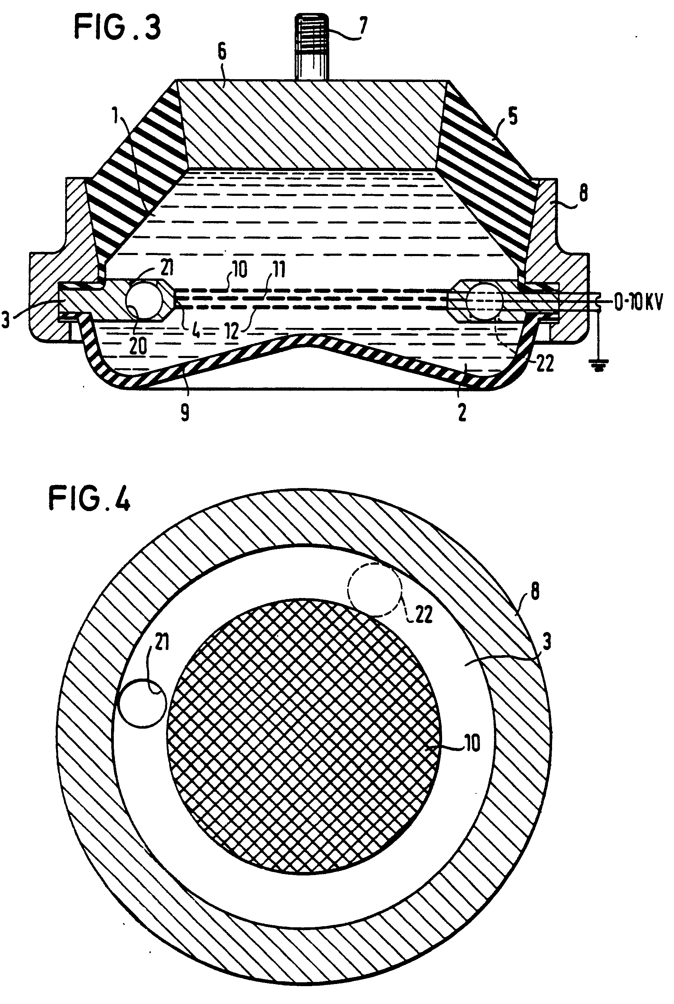

In dem in Fig. 3 und 4 dargestellten Ausführungsbeispiel ist parallel zu der Überströmöffnung 4 mit den Siebplatten 10, 11 und 12 ein herkömmlicher, wendelförmiger Kanal 20 in der Zwischenplatte 3 angeordnet. Dieser Kanal 20 weist eine Eintrittsöffnung 21 zur oberen Kammer 1 und eine untere Austrittsöffnung 22 zur unteren Kammer 2 auf, die nach dem dargestellten Ausführungsbeispiel um etwa 240° zueinander versetzt sind. Dieser Überströmkanal 20 bestimmt durch die in ihm schwingende Flüssigkeitssäule Höhe und Frequenzlage der maximalen Dämpfung, wie bei herkömmlichen, hydraulisch gedämpften Motorlagern. Zweckmäßig ist es dabei, wenn dieser Kanal 20 in seinen Abmessungen so auf die Volumensteifigkeit des Lagers und das spezifische Gewicht sowie die Viskosität der Flüssigkeit abgestimmt ist, daß sich für die in dem Kanal 20 schwingende Flüssigkeitssäule Eigenfrequenzen zwischen 2 und 50 Hz ergeben.

Wenn durch Anlegen einer Spannung an die Siebplatten 10, 11 und 12 ein Flüssigkeitsdurchgang durch die Überströmöffnung 4 gesperrt ist und ein Flüssigkeitsaustausch nur noch über den Kanal 20 erfolgen kann, so verhält sich ein solches Lager wie ein herkömmliches, hydraulisch gedämpftes Lager mit Trägheitseffekten. Im spannungslosen Zustand ist der Kanal 20 dann praktisch durch die Überströmöffnung 4 mit sehr geringem Strömungswiderstand überbrückt. Das Lager verhält sich dann bei niedrigen Frequenzen nahezu wie ein reines Gummilager, da einem Flüssigkeitsaustausch von einer Kammer in die andere praktisch kein Widerstand entgegengesetzt wird.

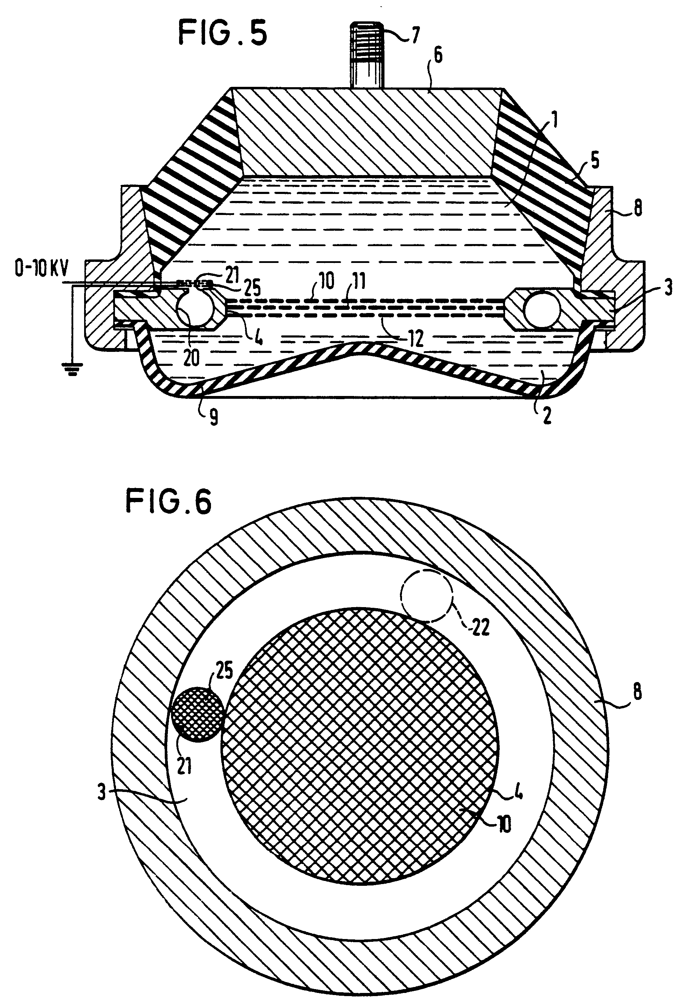

Bei den Ausführungsbeispielen nach den Fig. 5 und 6, die ein Lager entsprechend dem mechanischen Aufbau nach Fig. 3 und 4 entsprechen, weist hierbei auch der Überströmkanal 20 ein Siebplattenpaket 25 auf, das in der gezeigten Darstellung am Eintritt 21 des Kanals 20 angeordnet ist. Es ist aber auch möglich, dieses Siebplattenpaket 21 am Kanalaustritt 22 anzuordnen. Durch diese Siebplatten 25 kann dann auch dieser parallel geschaltete Überströmkanal 20 durch Anlegen eines elektrischen Feldes mehr oder weniger verschlossen werden, so daß damit der Durchfluß durch die beiden parallel liegenden Kanäle 4 und 20 individuell gesteuert und aufeinander abgestimmt werden kann.

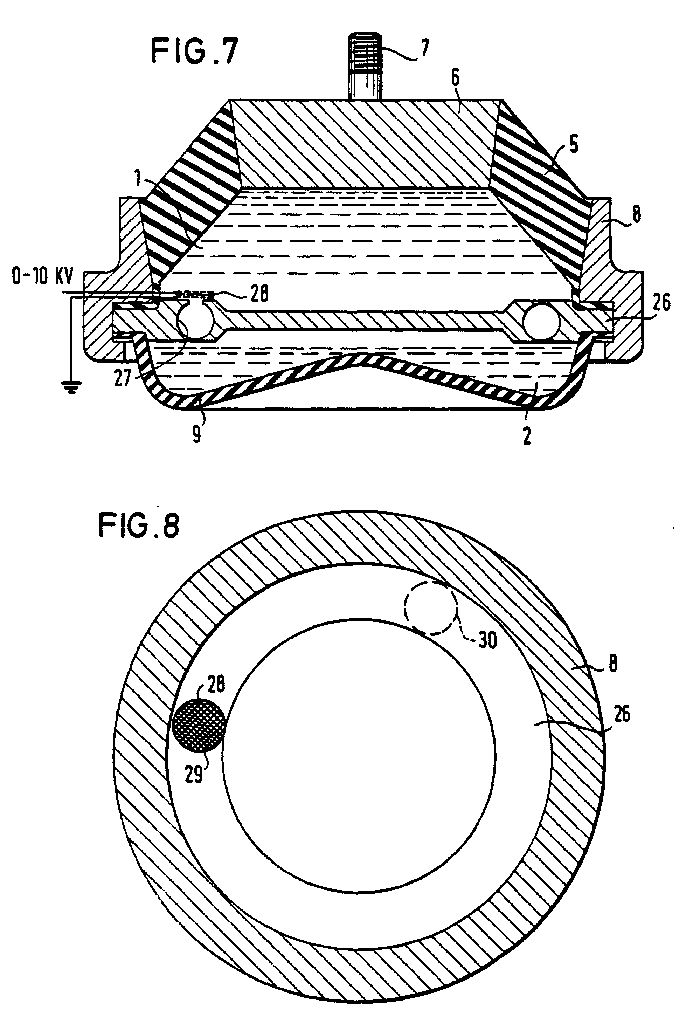

Wie aus den Ausführungsbeispielen nach Fig. 7 und 8 ersichtlich, ist es grundsätzlich auch möglich, hydraulisch gedämpfte Zweikammer-Motorlager, die in der starren Zwischenplatte 26 lediglich einen herkömmlichen, wendelförmigen Kanal 27 aufweisen, mit einem derartigen Siebplattenpaket 28 am Eintritt 29 oder am Austritt 30 individuell zu steuern.

Insgesamt lassen sich also bei Verwendung von Siebplatten als Elektroden und den beschriebenen Anordnungen auch aktive Ansteuerungen von hydraulisch gedämpften Motorlagern mit Überströmkanälen beliebigen Querschnittes realisieren und die Strömung in den Kanälen durch ein Siebelektrodenpaket, das der Strömung ohne angelegtes Feld nur einen sehr gerigen Widerstand entgegensetzt, kontrollieren. Damit ist man bei der Kanalauslegung nicht mehr abhängig von einer durch die maximalen elektrischen Feldstärken oder einer zur Vermeidung von Spitzenentladungen oder Überschlägen bedingten Elektrodengeometrie.

## Patentansprüche

1. Aktives Zweikammer-Motorlager mit hydraulischer Dämpfung, insbesondere für Kraftfahrzeuge, dessen gummielastische Umfangswände aufweisende Kammern mit einer elektroviskosen Flüssigkeit gefüllt sind, deren Viskosität durch Anlegen eines elektrischen Feldes im Bereich mindestens einer, eine starre Zwischenplatte zwischen den beiden Kammern durchsetzende Überströmöffnung steuerbar ist, dadurch gekennzeichnet, daß im Bereich mindestens einer der Überströmöffnungen (4; 20; 27) mindestens zwei quer zur Flüssigkeitsströmung verlaufende und parallel hintereinanderliegende metallische Siebplatten (10, 11, 12; 25; 28) angeordnet sind, die als Elektroden geschaltet sind.

2. Aktives Zweikammer-Motorlager nach Anspruch 1, dadurch gekennzeichnet, daß eine Überströmöffnung (4) die Zwischenplatte (3) senkrecht durchsetzt und einen Durchmesser von 10 bis 90 % des Zwischenplattendurchmessers aufweist und daß die Siebplatten (10, 11, 12) parallel zueinander in die Überströmöffnung (4) eingesetzt sind und diese vollflächig überdecken.

3. Aktives Zweikammer-Motorlager nach Anspruch 2, dadurch gekennzeichnet, daß der mit den Siebplatten (10, 11, 12) abgedeckten Überströmöffnung (4) ein langer, dies Siebplatten (10, 11, 12) wendelförmig umschließender und in der Zwischenplatte (3) verlaufender Überströmkanal (20) parallelgeschaltet ist.

4. Aktives Zweikammer-Motorlager nach Anspruch 3, dadurch gekennzeichnet, daß der Überströmkanal (20) am Eintritt (21) oder Austritt (22) ebenfalls mit als Elektroden geschalteten Siebplatten (25) abgedeckt ist.

5. Aktives Zweikammer-Motorlager nach Anspruch 1, dadurch gekennzeichnet, daß die Überströmöffnung als die Zwischenplatte (3) wendelförmig durchsetzender Kanal (27) ausgebildet ist, der am Eintritt (29) oder Austritt (30) mit als Elektroden geschalteten Siebplatten (28) abgedeckt ist.

6. Aktives Zweikammer-Motorlager nach Anspruch 1 bis 5, dadurch gekennzeichnet, daß die Siebplatten (10, 11, 12; 25; 28) aus dünnem Drahtgewebe bestehen.

7. Aktives Zweikammer-Motorlager nach Anspruch 6, dadurch gekennzeichnet, daß sowohl Maschenweite als auch Drahtstärke der Siebe maximal 1/3 des Abstandes der Siebplatten (10, 11, 12; 25; 28) betragen.

8. Aktives Zweikammer-Motorlager nach Anspruch 7, dadurch gekennzeichnet, daß der Abstand der Siebplatten (10, 11, 12; 25; 28) voneinander 1 bis 5 mm beträgt.

## Claims

1. Active two-chamber engine mount with hydraulic damping, in particular for motor vehicles, in which the chambers, which have rubbery elastic outer walls, are filled with an electroviscous liquid the viscosity of which can be controlled by the application of an electric · field in the region of at least one overflow opening extending through a rigid intermediate plate between the two chambers, characterised in that at least two parallel metal screen plates (10, 11, 12; 25; 28) situated behind one another and extending transversely to the flow of liquid are arranged in the region of at least one of the overflow openings (4; 20; 27) and wired as electrodes.

2. Active two-chamber engine mount according to claim 1, characterised in that an overflow opening (4) extends perpendicularly through the intermediate plate (3) and has a diameter equal to 10 to 90 % of the diameter of the intermediate plate and in that the screen plates (10, 11, 12) are inserted parallel to one another in the overflow opening (4) and cover the whole area of this opening (4).

3. Active two-chamber engine mount according to claim 2, characterised in that a long overflow channel (20) extending through the intermediate plate (3) and spirally surrounding the screen plates (10, 11, 12) is connected in parallel with the overflow opening (4) which is covered by the screen plates (10, 11, 12).

4. Active two-chamber engine mount according to claim 3, characterised in that the overflow channel (20) is also covered at its entrance (21) or exit (22) by screen plates (25) which are wired as electrodes.

5. Active two-chamber engine mount according to claim 1, characterised in that the overflow channel is in the form of a channel (27) extending spirally through the intermediate plate (3) and covered at the entrance (29) or exit (30) by screen plates (28) wired as electrodes.

6. Active two-chamber engine mount according to claims 1 and 5, characterised in that the screen plates (10, 11, 12; 25; 28) are made of thin wire mesh.

7. Active two-chamber engine mount according to claim 6, characterised in that both the width of the mesh and the thickness of the wire of the screens amount to at the most 1/3 of the distance between the screen plates (10, 11, 12; 25; 28).

8. Active two-chamber engine mount according to claim 7, characterised in that the distance between the screen plates (10, 11, 12; 25; 28) is from 1 to 5 mm.

**Revendications**

1. Support actif à deux chambres pour moteur, à amortissement hydraulique, notamment pour des véhicules automobiles, dont les chambres, qui possèdent des parois périphériques elastiques, sont remplies par un liquide électro-visqueux, dont la viscosité peut être réglée au moyen de l'application d'un champ électrique dans la zone d'au moins une ouverture de trop-plein traversant une plaque intercalaire rigide disposée entre les deux chambres, caractérisé par le fait qu'au moins deux plaques perforées métalliques (10, 11, 12; 25; 28), qui s'étendent transversalement par rapport à l'écoulement du liquide, qui sont situées parallèlement l'une derrière l'autre et qui sont branchées en tant qu'électrodes, sont disposées au voisinage d'au moins l'une des ouvertures de trop-plein (4; 20; 27).

2. Support actif à deux chambres pour moteur suivant la revendication 1, caractérisé par le fait qu'une ouverture de trop-plein (4) traverse perpendiculairement la plaque intercalaire (3) et possède un diamètre compris entre 10 et 90 % du diamètre de la plaque intercalaire et que les plaques perforées (10, 11, 12) sont insérées parallèlement l'une à l'autre dans l'ouverture de trop-plein (4) et recouvrent cette ouverture sur toute sa surface.

3. Support actif à deux chambres pour moteur suivant la revendication 2, caractérisé par le fait qu'en parallèle avec l'ouverture de trop-plein (4), recouverte par les plaques perforées (10, 11, 12), se trouve disposé un long canal de trop-plein (20) entourant avec une forme hélicoïdale les plaques perforées (10, 11, 12) et disposé dans la plaque intercalaire (3).

4. Support actif à deux chambres pour moteur selon la revendication 3, caractérisé en ce que le canal de trop-plein (20) est également recouvert, au niveau de son entrée (21) ou de sa sortie (22), par des plaques perforées (25) branchées en tant qu'électrodes.

5. Support actif à deux chambres pour moteur suivant la revendication 1, caractérisé par le fait que l'ouverture de trop-plein est réalisée sous la forme d'un canal (27), qui traverse avec une forme hélicoïdale la plaque intercalaire (3) et qui estrecouvert, au niveau de son entrée (29) ou de sa sortie (30), par des plaques perforées (28) branchées en tant qu'électrodes.

6. Support actif à deux chambres pour moteur suivant les revendications 1 à 5, caractérisé par le fait que les plaques perforées (10, 11, 12; 25; 28) sont formées d'un tissu métallique mince.

7. Support actif à deux chambres pour moteur suivant la revendication 6, caractérisé par le fait qu'aussi bien l'ouverture des mailles que l'épaisseur du fil des plaques perforées est égale au maximum à 1/3 de la distance entre les plaques perforées (10, 11, 12; 25; 28).

8. Support actif à deux chambres pour moteur suivant la revendication 7, caractérisé par le fait que la distance entre les plaques perforées (10, 11, 12; 25; 28) est comprise entre 1 et 5 mm.

FIG.1

FIG.2

# FIG.3

# FIG.4

FIG.5

7
6
1
5
8
0-10 KV
21
25
10
11
3
4
12
20
9
2

FIG.6

22
8
25
3
4
21
10

## FIG.7

0-10 KV

## FIG.8